# FASCICULE DE BREVET EUROPEEN

(11) **EP 3 081 440 B1**
(45) Date de publication et mention de la délivrance du brevet: **18.04.2018**
(21) Numéro de dépôt: 16163145.2
(22) Date de dépôt: 31.03.2016
(51) Int. Cl.: B60S 1/38

(54) **EMBOUT D'EXTRÉMITÉ PRÉVU POUR ÊTRE MONTÉ SUR UN SUPPORT FLEXIBLE ET BALAI D'ESSUYAGE COMPRENANT L'EMBOUT D'EXTRÉMITÉ**
ENDSTÜCK ZUM MONTIEREN AUF EINE FLEXIBLE HALTERUNG, UND SCHEIBENWISCHER, DER EIN SOLCHES ENDSTÜCK UMFASST
END-PIECE INTENDED TO BE MOUNTED ON A FLEXIBLE SUPPORT AND WIPER INCLUDING THE END-PIECE AND THE FLEXIBLE SUPPORT

(30) Priorité: 16.04.2015 FR 1553362
(43) Date de publication de la demande: 19.10.2016
(73) Titulaire: Valeo Systèmes d'Essuyage, 78322 Le Mesnil Saint Denis (FR)
(72) Inventeur: CARRION, Julien, 63340 Charbonnier les mines (FR); KOLANOWSKI, Grégory, 43300 SIAUGUES SAINTE MARIE (FR); PETITET, Gilles, 78320 LE MESNIL SAINT DENIS (FR)
(74) Mandataire: Callu Danseux, Violaine

(56) Documents cités:
- DE-A1-102013 212 507
- US-A1- 2014 317 876

## Description

Le domaine de la présente invention est celui des balais d'essuyage destinés à équiper un véhicule automobile. L'invention concerne plus particulièrement un embout d'extrémité prévu pour être monté sur un support flexible, l'embout d'extrémité et le support flexible étant constitutifs d'un balai d'essuyage. L'invention vise également ledit balai d'essuyage. Le document US 2014/0317876 A1 décrit un embout d'extrémité selon le préambule de la revendication 1. Un véhicule automobile est couramment équipé d'un système d'essuyage pour assurer un balayage et un lavage d'un pare-brise constitutif du véhicule automobile afin d'éviter que la vision, qu'a un conducteur du véhicule automobile, de son environnement ne soit perturbée. Le système d'essuyage est classiquement entraîné par un bras effectuant un mouvement de va-et-vient angulaire en vis-à-vis du pare-brise et à l'intérieur d'un champ de vision du conducteur. Le système d'essuyage comporte au moins un balai d'essuyage allongé, porteur lui-même d'une lame de frottement réalisée en une matière flexible. La lame de frottement racle contre le pare-brise et évacue l'eau en l'amenant en dehors du champ de vision du conducteur. Le balai d'essuyage est réalisé sous la forme, soit, dans une version classique, d'un palonnier articulé qui tient la lame de frottement en plusieurs endroits discrets, soit, dans une version plus récente couramment dénommée en anglais "flat blade" (pour "lame plate"), d'un ensemble semi-rigide qui maintient la lame racleuse sur toute sa longueur. Dans cette seconde solution, l'ensemble semi-rigide est rattaché à un bras que comprend le système d'essuyage par un ensemble constitué d'un connecteur mécanique et d'un adaptateur. Le connecteur mécanique est une pièce qui est sertie directement sur le balai d'essuyage, alors que l'adaptateur est une pièce intermédiaire qui permet la fixation du connecteur sur le bras du système d'essuyage.

Le document WO 2013/000650 propose un système d'essuyage du deuxième type dont l'ensemble semi-rigide comprend un support flexible et un embout d'extrémité qui sont solidarisés par l'intermédiaire d'un moyen de verrouillage que comporte l'embout d'extrémité.

Le moyen de verrouillage s'avère insatisfaisant notamment dans des conditions d'utilisation sévères mais courantes auxquelles le balai d'essuyage est susceptible d'être soumis.

En premier lieu, on constate que le moyen de verrouillage peut être actionné de manière intempestive, notamment par un utilisateur ou un passant indélicat, ce qui dans certaines situations conduit à un désaccouplement de l'embout d'extrémité vis-à-vis du balai d'essuyage.

En second lieu, une liaison mécanique entre le moyen de verrouillage et le support du balai d'essuyage n'est pas suffisamment assurée. Il convient d'élever un niveau de sécurité et/ou de fiabilité de cette liaison mécanique.

En dernier lieu, le balai d'essuyage est susceptible de subir des contraintes mécaniques qui peuvent provoquer une détérioration, voire une dislocation du balai d'essuyage à partir d'une séparation de l'embout d'extrémité et du support flexible, un tel démontage du balai d'essuyage entraînant par exemple une perte du ou des déflecteurs d'air équipant le balai d'essuyage et *in fine* une destruction de ce dernier.

Le but de la présente invention est de résoudre les inconvénients décrits ci-dessus en proposant un embout d'extrémité robuste, agencé pour résister à des conditions d'utilisation sévères, et notamment un actionnement intempestif de l'embout d'extrémité, ce dernier étant de surcroît facile à réaliser et comportant le moins de pièces possible. L'embout d'extrémité ainsi conçu augmente un niveau de sécurité et/ou de fiabilité de la fixation du moyen de verrouillage vis-à-vis du support flexible constitutif d'un balai d'essuyage de la présente invention, qui est apte à résister à une volonté de détérioration d'un utilisateur ou un passant indélicat.

Un embout d'extrémité de la présente invention est un embout d'extrémité pour un balai d'essuyage d'une vitre d'un véhicule automobile comprenant au moins un support flexible ainsi qu'une lame de frottement destinée à être appliquée contre la vitre. L'embout d'extrémité comprend un logement apte à recevoir une partie terminale du support flexible. L'embout d'extrémité comprend au moins un moyen de verrouillage de la partie terminale du support flexible en position engagée à l'intérieur du logement. Le moyen de verrouillage comprend au moins une languette.

Selon la présente invention, le moyen de verrouillage comprend au moins une cavité qui est délimitée au moins par une première paroi latérale, une deuxième paroi latérale et par la languette.

La languette est avantageusement montée mobile en basculement sur la première paroi latérale.

La cavité est avantageusement agencée en un réceptacle d'un moyen de collage disposé à l'intérieur de la cavité pour immobiliser en position de verrouillage la languette. La cavité est agencée pour contenir une quantité déterminée du moyen de collage. La cavité est également agencée pour empêcher le moyen de collage disposé dans la cavité de se répandre hors de celle-ci.

La cavité est notamment délimitée par au moins une paroi de fond que comporte l'embout d'extrémité.

La cavité débouche préférentiellement au droit d'une ouverture ménagée à travers l'embout d'extrémité.

La languette s'étend de préférence selon un premier axe d'extension longitudinale de l'embout d'extrémité.

De préférence, la première paroi latérale et la deuxième paroi latérale s'étendent selon un deuxième axe qui est orthogonal au premier axe d'extension longitudinale de l'embout d'extrémité.

La languette comprend avantageusement une butée de mise en contact de la languette contre la deuxième paroi latérale.

De préférence, la butée est agencée en une rampe de glissement de la languette contre la deuxième paroi latérale.

La butée s'étend préférentiellement selon le deuxième axe.

La cavité présente avantageusement une première longueur prise selon le premier axe entre la première paroi latérale et la deuxième paroi latérale qui est égale à une première distance prise selon le premier axe entre une extrémité proximale et une extrémité distale que comprend la languette.

La languette est par exemple prolongée d'un doigt qui s'étend selon le premier axe et qui est relié à la languette par l'intermédiaire de l'extrémité proximale.

La languette est par exemple équipée d'un téton qui s'étend selon le deuxième axe et qui est relié à la languette par l'intermédiaire de l'extrémité proximale.

Un balai d'essuyage de la présente invention est principalement reconnaissable en ce que le balai d'essuyage comprend au moins un tel embout d'extrémité et ledit support flexible qui est apte à être inséré à l'intérieur d'une bouche d'entrée de l'embout d'extrémité, le support flexible étant pourvu d'au moins une encoche équipant un rebord longitudinal du support flexible.

Le support flexible est un support longitudinal apte à être relié à un bras d'entrainement par le biais d'un connecteur solidaire d'une portion centrale du support.

L'encoche est avantageusement d'une troisième longueur qui est égale à la première longueur et à la première distance. D'autres caractéristiques, détails et avantages de l'invention ressortiront plus clairement à la lecture de la description donnée ci-après à titre indicatif en relation avec des dessins dans lesquels :

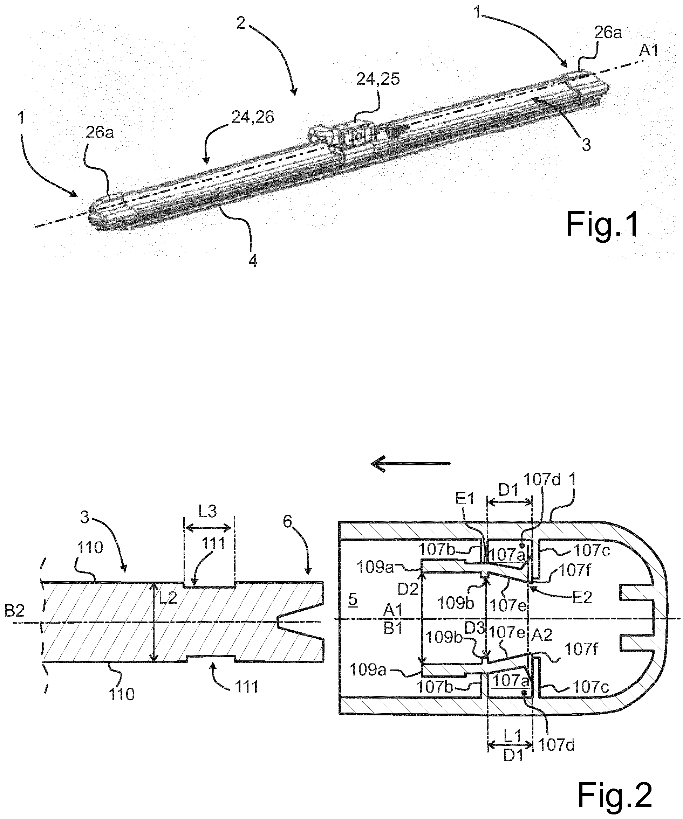

- la figure 1 est une vue générale en perspective d'un balai d'essuyage selon la présente invention, qui est prévu pour être monté sur un pare-brise d'un véhicule automobile,
- la figure 2 est une vue en coupe partielle d'un embout d'extrémité et d'un support flexible constitutifs du balai d'essuyage illustré par exemple sur la figure 1, ladite coupe étant réalisée selon un plan parallèle au plan du pare-brise et illustrant une première étape d'assemblage de l'embout d'extrémité sur le support flexible,

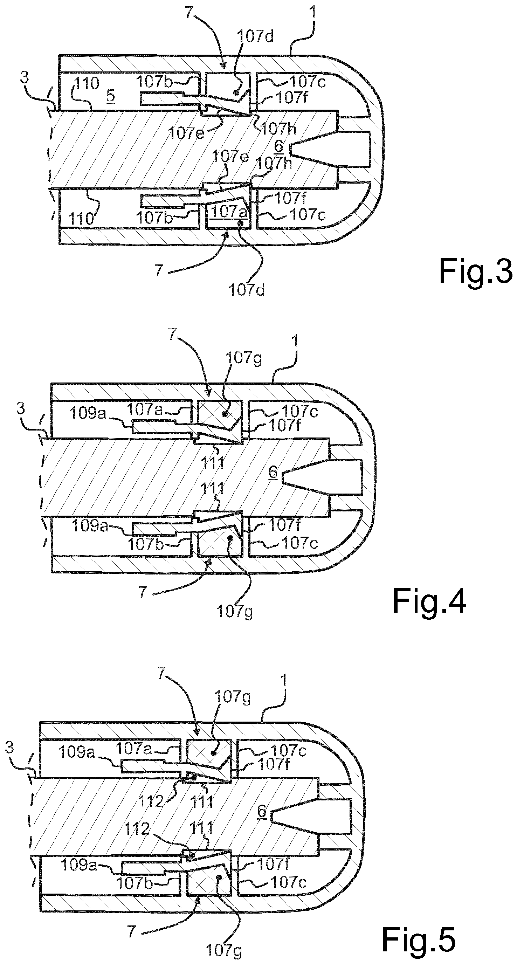

- la figure 3 est une vue en coupe partielle de l'embout d'extrémité et du support flexible constitutifs du balai d'essuyage illustré par exemple sur la figure 1, ladite coupe étant réalisée selon le plan parallèle au plan du pare-brise et illustrant une deuxième étape d'assemblage de l'embout d'extrémité sur le support flexible qui est consécutive à la première étape illustrée sur la figure 2,
- la figure 4 est une vue en coupe partielle de l'embout d'extrémité et du support flexible constitutifs du balai d'essuyage illustré par exemple sur la figure 1, ladite coupe étant réalisée selon le plan parallèle au plan du pare-brise et illustrant une troisième étape préférée d'assemblage de l'embout d'extrémité sur le support flexible qui est consécutive à la deuxième étape illustrée sur la figure 3.
- la figure 5 est une vue en coupe partielle de l'embout d'extrémité et du support flexible constitutifs du balai d'essuyage illustré par exemple sur la figure 1, ladite coupe étant réalisée selon le plan parallèle au plan du pare-brise illustrant une étape complémentaire d'assemblage de l'embout d'extrémité sur le support flexible qui est consécutive ou simultanée à la deuxième étape illustrée sur la figure 4.

Il faut tout d'abord noter que les figures exposent la présente invention de manière détaillée pour mettre en oeuvre l'invention, lesdites figures pouvant bien entendu servir à mieux définir l'invention le cas échéant.

Dans la suite de la description, la dénomination longitudinale se réfère à l'orientation d'un balai d'essuyage ou d'un embout d'extrémité selon l'invention. La direction longitudinale correspond à un axe principal du balai d'essuyage dans lequel ce dernier s'étend, alors que des orientations latérales correspondent à des droites concourantes, c'est-à-dire qui croisent la direction longitudinale, en étant notamment perpendiculaires à un premier axe longitudinal d'extension générale du balai d'essuyage dans son plan de rotation.

Sur la figure 1, un balai d'essuyage 2 de la présente l'invention est représenté en perspective. Un tel balai d'essuyage 2 est utilisé pour racler une vitre d'un véhicule automobile. Préférentiellement, la vitre est un pare-brise équipant un habitacle du véhicule automobile. Alternativement, la vitre est une lunette arrière du véhicule automobile. Dans ces cas-là, le balai d'essuyage 2 a pour fonction de déplacer hors d'un champ de vision d'un conducteur l'eau et/ou des salissures déposées sur le pare-brise. Selon un autre exemple, la vitre est par exemple une vitre d'un projecteur équipant le véhicule automobile. Dans ce cas-là, le balai d'essuyage 2 a pour fonction de déplacer hors d'un champ d'éclairage l'eau et/ou des salissures déposées sur la vitre.

Le balai d'essuyage 2 est constitué d'au moins un support flexible 3, autrement appelé support longitudinal, un composant 24, une lame de frottement 4 et au moins un, voire deux, embouts d'extrémité 1 installés sur chaque partie terminale du support flexible 3.

Le support flexible 3 peut prendre la forme d'une unique bande métallique plate et flexible. Selon une alternative, le support flexible 3 peut être formé par deux bandes métalliques et flexibles logées chacune dans une encoche ménagée de part et d'autre de la lame de frottement 4. Dans les deux cas ci-dessus, à l'état de repos, une telle bande métallique est courbée selon un plan perpendiculaire à une direction longitudinale de la bande métallique. La fonction d'une telle bande métallique, qu'elle soit unique ou double, est de répartir les efforts d'appui le long de la lame de frottement 4 générés par un moyen de connexion 25 attaché au support flexible 3 au centre, longitudinalement, du balai d'essuyage 2.

Le composant 24 désigne plusieurs types de pièce constitutive du balai d'essuyage 2. Il peut s'agir du moyen de connexion 25, autrement appelé connecteur, destiné à relier le balai d'essuyage 2 à un bras d'entraînement en rotation du balai d'essuyage. Il peut également s'agir d'un ou plusieurs déflecteurs d'air 26 rapportés sur le support flexible 3 et dont la fonction est de transformer le flux d'air passant sur le balai d'essuyage 2 en une force d'appui qui plaque la lame de frottement 4 contre la vitre.

Sur les figures 2 à 5, l'embout d'extrémité 1 comprend au moins un moyen de verrouillage 7 entre le support flexible 3 et l'embout d'extrémité 1. Le moyen de verrouillage 7 est avantageusement indémontable en ce sens que le moyen de verrouillage 7 est robuste pour des conditions d'utilisation sévères mais courantes du balai d'essuyage 2.

L'embout d'extrémité 1 comprend une paroi supérieure 26a qui prolonge le déflecteur d'air 26, la paroi supérieure 26a délimitant une ouverture 5 visible sous le balai d'essuyage 2.

De manière avantageuse, le moyen général de verrouillage 7 comprend des moyens élémentaires de verrouillage 107a, 107b, 107c, 107d, 107e, 107f et 107g qui sont complémentaires pour réaliser une fonction de clippage efficace et robuste de l'embout d'extrémité 1 sur le support flexible 3. Autrement dit, l'ensemble des moyens élémentaires de verrouillage 107a, 107b, 107c, 107d, 107e, 107f et 107g constituent solidairement le moyen général de verrouillage 7 en contribuant à un maintien robuste, pérenne, et finalement indémontable, de l'embout d'extrémité 1 sur le support flexible 3. Dit en d'autres mots, c'est par une fonction respective de chacun des moyens élémentaires de verrouillage 107a, 107b, 107c, 107d, 107e, 107f et 107g que le moyen général de verrouillage 7 est efficace et optimisé. Les moyens élémentaires de verrouillage 107a, 107b, 107c, 107d, 107e, 107f et 107g sont complémentaires les uns avec les autres pour constituer ensemble le moyen général de verrouillage 7 et assurer une fonction de maintien optimisé de l'embout d'extrémité 1 sur le support flexible 3.

Les moyens élémentaires de verrouillage 107a, 107b, 107c, 107d, 107e, 107f et 107g comprennent au moins une cavité 107a, au moins une première paroi latérale 107b, au moins une deuxième paroi latérale 107c, au moins une paroi de fond 107d, au moins une languette 107e, au moins une butée 107f et au moins un moyen de collage 107g.

Préférentiellement et selon la variante illustrée sur les figures 2 à 5, les moyens élémentaires de verrouillage 107a, 107b, 107c, 107d, 107e, 107f et 107g comprennent deux cavités 107a, deux premières parois latérales 107b, deux deuxièmes parois latérales 107c, deux parois de fond 107d, deux languettes 107e, deux butées 107f et deux moyens de collage 107g.

De préférence, les deux cavités 107a d'une part, les deux premières parois latérales 107b d'autre part, les deux deuxièmes parois latérales 107c d'autre part, les deux parois de fond 107d d'autre part, les deux languettes 107e, les deux butées 107f d'autre part et les deux moyens de collage 107g d'autre part sont ménagés respectivement en vis-à-vis l'un de l'autre en étant symétriquement répartis de part et d'autre d'un premier plan médian B1 de l'embout d'extrémité 1, qui est parallèle à un premier axe A1 d'extension longitudinale de l'embout d'extrémité 1, et avantageusement du balai d'essuyage 2.

La première paroi latérale 107b et la deuxième paroi latérale 107c sont ménagées selon un deuxième axe A2 d'extension latérale des parois latérales 107b et 107c. Le deuxième axe A2 est préférentiellement orthogonal au premier axe A1 d'extension longitudinale du balai d'essuyage 2.

La première paroi latérale 107b, la deuxième paroi latérale 107c, la paroi de fond 107d, la languette 107e et la butée 107f délimitent conjointement la cavité 107a. La cavité 107a est globalement conformée en un cube dont une seule face est ouverte au niveau de l'ouverture 5 tandis que les cinq autres faces sont obturées par la première paroi latérale 107b, la deuxième paroi latérale 107c, la paroi de fond 107d, la languette 107e et la butée 107f. La face du cube qui est ouverte vers l'ouverture 5 constitue un passage pour la mise en place du moyen de collage 107g à l'intérieur de la cavité 107a. La cavité 107a forme avantageusement un réceptacle étanche pour le moyen de collage 107g.

La languette 107e est montée mobile en pivotement sur la première paroi latérale 107b en une extrémité proximale E1 de la languette 107e, tel que plus particulièrement visible sur la figure 2. L'extrémité proximale E1 constitue avantageusement un point de jonction entre la première paroi latérale 107b et la languette 107e.

La butée 107f est ménagée en une extrémité distale E2 de la languette 107e. L'extrémité distale E2 est l'extrémité de la languette 107e qui est opposée à l'extrémité proximale E1 de la languette 107e. La butée 107f vient en appui contre la deuxième paroi latérale 107c. La butée 107f et la deuxième paroi latérale 107c sont en contact étroit l'une avec l'autre de manière à former une liaison étanche l'une avec l'autre. Pour optimiser encore l'étanchéité d'une telle liaison, la butée 107f est agencée en une rampe qui vient coulisser contre la deuxième paroi latérale 107c lors de la bascule de la languette 107e autour dudit point de jonction. A cet effet, la butée 107f est préférentiellement ménagée parallèlement au deuxième axe A2 pour pouvoir coulisser le long de la deuxième paroi latérale 107c.

Ces dispositions sont telles que la cavité 107a est apte à recevoir le moyen de collage 107g de manière étanche, c'est-à-dire sans que le moyen de collage 107g ne s'épanche en dehors de la cavité 107a. Autrement dit, la cavité 107a est apte à confiner le moyen de collage 107g entre la première paroi latérale 107b, la deuxième paroi latérale 107c, la paroi de fond 107d, la languette 107e et la butée 107f, pour minimiser une quantité de moyen de collage 107g employé.

En se reportant plus particulièrement sur la figure 2, la cavité 107a présente une première longueur L1 prise selon le premier axe A1 entre la première paroi latérale 107b et la deuxième paroi latérale 107c qui est égale à une première distance D1 prise selon le premier axe A1 entre l'extrémité proximale E1 et l'extrémité distale E2.

Selon une forme de réalisation, la languette 107e est prolongée d'un doigt 109a qui est agencé en étant globalement allongé selon le premier axe A1. Plus particulièrement, le doigt 109a est relié à la languette 107e par l'intermédiaire de l'extrémité proximale E1. Le doigt 109a constitue un premier moyen de guidage de l'embout d'extrémité 1 lors d'une mise en place de ce dernier sur le support flexible 3. A cet effet, le doigt 109a est susceptible de coulisser le long d'un rebord longitudinal 110 du support flexible 3 pour guider l'introduction d'une extrémité terminale 6 du support flexible 3 à l'intérieur de l'ouverture 5. Un tel guidage en glissière de l'embout d'extrémité 1 sur l'extrémité terminale 6 du support flexible 3 présente un jeu important en raison du fait qu'une deuxième distance D2 prise entre deux doigts opposés 109a selon le deuxième axe A2 est supérieure à une deuxième longueur L2 prise entre deux rebords longitudinaux opposés 110 du support flexible 3.

Selon une autre forme de réalisation, la languette 107e est équipée d'un téton 109b qui est agencé en étant globalement allongé selon le deuxième axe A2. Plus particulièrement, le téton 109b est relié à la languette 107e par l'intermédiaire de l'extrémité proximale E1. Le téton 109b constitue un deuxième moyen de guidage de l'embout d'extrémité 1 lors d'une mise en place de ce dernier sur le support flexible 3. A cet effet, le téton 109b est susceptible de coulisser le long du rebord longitudinal 110 du support flexible 3 pour guider l'introduction de l'extrémité terminale 6 du support flexible 3 à l'intérieur de l'ouverture 5. Un tel guidage en glissière de l'embout d'extrémité 1 sur l'extrémité terminale 6 du support flexible 3 présente un jeu minimal en raison du fait qu'une troisième distance D3 prise entre deux tétons opposés 109b selon le deuxième axe A2 est égale à la deuxième longueur L2 prise entre deux rebords longitudinaux opposés 110 du support flexible 3.

On notera à ce stade de la description de l'invention que le doigt 109a et le téton 109b constituent un moyen annexe de guidage préalable au verrouillage de l'embout d'extrémité 1 sur le support flexible 3.

Une encoche 111 est ménagée sur chaque rebord longitudinal 110 du support flexible 3. L'encoche 111 est apte à recevoir au moins partiellement la languette 107e en position d'assemblage entre eux du support flexible 3 et de l'embout d'extrémité 1, telle qu'illustrée sur les figures 3 et 4. Plus particulièrement, l'encoche 111 est apte à recevoir au moins partiellement un talon 107h que comporte la languette 107e, tel qu'illustré sur la figure 3. Préférentiellement, le talon 107h est ménagé en extrémité de la butée 107f. L'encoche 111 est d'une troisième longueur L3, prise selon un deuxième axe de symétrie B2 du support flexible 3, qui est préférentiellement égale à la première longueur L1 et à la première distance D1, tel qu'illustré sur la figure 2.

Sur la figure 4, le moyen de collage 107g remplit totalement et exclusivement la cavité 107a pour immobiliser la languette 107e en position de verrouillage, selon au moins un sens opposé à son sens d'introduction dans l'encoche 111.

Sur la variante de la figure 5, le moyen de collage 107g remplit totalement la cavité 107a ainsi qu'un logement 112 ménagé entre la languette 107e et le support flexible 3 pour immobiliser la languette 107e en position de verrouillage. Un tel logement 112 comprend avantageusement l'encoche 111.

Le moyen de collage 107g est indifféremment une résine, une colle ou un moyen analogue, et en tout état de cause un moyen liquide apte à emplir la cavité 107a et/ou le logement 112 puis à bloquer le mouvement de la languette 107e. Une telle résine ou colle est agencée pour se solidifier à chaud ou à froid, par évaporation ou vulcanisation, de manière à bloquer le mouvement de la languette 107e.

En se reportant à nouveau sur les figures 2 à 5 et successivement l'une après l'autre, la figure 2 illustre une première étape d'un procédé d'assemblage du balai d'essuyage 2, la figure 3 représente une deuxième étape du procédé d'assemblage, la figure 4 illustre une première variante d'une troisième étape du procédé d'assemblage et la figure 5 illustre une deuxième variante de la troisième étape du procédé d'assemblage, cette dernière étant complémentaire à la première variante de la troisième étape et réalisé postérieurement, ou de manière simultanée.

Sur la figure 2, le procédé d'assemblage entre eux du support flexible 3 et de l'embout d'extrémité 1 comprend la première étape de mise en vis-à-vis de l'embout d'extrémité 1 en face du support flexible 3. Plus particulièrement, ladite première étape comprend une mise en vis-à-vis d'une bouche d'entrée de l'embout d'extrémité 1 avec l'extrémité terminale 6 du support flexible 3.

Sur la figure 3, le procédé d'assemblage entre eux du support flexible 3 et de l'embout d'extrémité 1 comprend la deuxième étape d'insertion du support flexible 3 à l'intérieur de l'embout d'extrémité 1 à partir d'un coulissement des rebords longitudinaux 110 du support flexible 3 entre les doigts 109a de l'embout d'extrémité 1, puis d'un coulissement des rebords longitudinaux 110 du support flexible 3 entre les tétons 109b de l'embout d'extrémité 1 jusqu'à ce que les talons 107h des languettes 107e soient au moins partiellement logée à l'intérieur des encoches 111. Bien entendu, cette deuxième étape d'insertion peut être opérée pour un support flexible 3 ne comportant d'une seule encoche 111 et un embout d'extrémité 1 ne comprenant qu'un seul moyen de verrouillage, c'est-à-dire une unique languette 107e. De manière alternative, un embout d'extrémité 1 comprenant deux languettes 107e peut être combiné à un support flexible 3 ne comprenant qu'une encoche 111 par partie terminale.

Sur la figure 4, le procédé d'assemblage entre eux du support flexible 3 et de l'embout d'extrémité 1 comprend la première variante de la troisième étape de dépôt du moyen de collage 107g à l'intérieur de la cavité 107a pour immobiliser la languette 107e, et avantageusement la solidariser, en contact contre la deuxième paroi latérale 107c en vue de rendre robuste et pérenne le montage de l'embout d'extrémité 1 et du support flexible 3, et notamment éviter une désolidarisation des déflecteurs d'air 26 du balai d'essuyage 2 et plus généralement un démontage des composants du balai d'essuyage 2.

Sur la figure 5, le procédé d'assemblage entre eux du support flexible 3 et de l'embout d'extrémité 1 comprend la deuxième variante de la troisième étape de dépôt du moyen de collage 107g à l'intérieur de la cavité 107a et du logement 112 pour solidariser et immobiliser la languette 107e en contact contre la deuxième paroi latérale 107c en vue de rendre robuste et pérenne le montage de l'embout d'extrémité 1 et du support flexible 3, et notamment éviter une désolidarisation des déflecteurs d'air 26 du balai d'essuyage 2 et plus généralement un démontage des composants du balai d'essuyage 2.

## Revendications

1. Embout d'extrémité (1) pour un balai d'essuyage (2) d'une vitre d'un véhicule automobile comprenant au moins un support flexible (3) ainsi qu'une lame de frottement (4) destinée à être appliquée contre la vitre, l'embout d'extrémité (1) comprenant un logement (5) apte à recevoir une partie terminale (6) du support flexible (3), l'embout d'extrémité (1) comprenant au moins un moyen de verrouillage (7) de la partie terminale (6) du support flexible (3) en position engagée à l'intérieur du logement (5), le moyen de verrouillage (7) comprenant au moins une languette (107e), **caractérisé en ce que** le moyen de verrouillage (7) comprend au moins une cavité (107a) qui est délimitée au moins par une première paroi latérale (107b), une deuxième paroi latérale (107c) et par la languette (107e).

2. Embout d'extrémité (1) selon la revendication 1, **caractérisé en ce que** la languette (107e) est montée mobile en basculement sur la première paroi latérale (107b).

3. Embout d'extrémité (1) selon l'une quelconque des revendications précédentes, **caractérisé en ce que** la cavité (107a) est agencée en un réceptacle d'un moyen de collage (107g) disposé à l'intérieur de la cavité (107a) pour immobiliser en position de verrouillage la languette (107e).

4. Embout d'extrémité (1) selon l'une quelconque des revendications précédentes, **caractérisé en ce que** la cavité (107a) est délimitée par au moins une paroi de fond (107d) que comprend l'embout d'extrémité (1).

5. Embout d'extrémité (1) selon l'une quelconque des revendications précédentes, **caractérisé en ce que** la cavité (107a) débouche au droit d'une ouverture (5) ménagée à travers l'embout d'extrémité (1).

6. Embout d'extrémité (1) selon l'une quelconque des revendications précédentes, **caractérisé en ce que** la languette (107e) s'étend selon un premier axe (A1) d'extension longitudinale de l'embout d'extrémité (1).

7. Embout d'extrémité (1) selon la revendication 6, **caractérisé en ce que** la première paroi latérale (107b) et la deuxième paroi latérale (107c) s'étendent selon un deuxième axe (A2) qui est orthogonal au premier axe (A1) d'extension longitudinale de l'embout d'extrémité (1).

8. Embout d'extrémité (1) selon l'une quelconque des revendications précédentes, **caractérisé en ce que** la languette (107e) comprend une butée (107f) de mise en contact de la languette (107e) contre la deuxième paroi latérale (107c).

9. Embout d'extrémité (1) selon la revendication 8, **caractérisé en ce que** la butée (107f) est agencée en une rampe de glissement de la languette (107e) contre la deuxième paroi latérale (107c).

10. Embout d'extrémité (1) selon la revendication 7 et l'une quelconque des revendications 8 et 9, **caractérisé en ce que** la butée (107f) s'étend selon le deuxième axe (A2).

11. Embout d'extrémité (1) selon l'une quelconque des revendications 6 à 10, **caractérisé en ce que** la cavité (107a) présente une première longueur (L1) mesurée selon le premier axe (A1) entre la première paroi latérale (107b) et la deuxième paroi latérale (107c) qui est égale à une première distance (D1) mesurée selon le premier axe (A1) entre une extrémité proximale (E1) et une extrémité distale (E2) que comprend la languette (107e).

12. Embout d'extrémité (1) selon les revendications 6 et 11, **caractérisé en ce que** la languette (107e) est prolongée d'un doigt (109a) qui s'étend selon le premier axe (A1) et qui est relié à la languette (107e) par l'intermédiaire de l'extrémité proximale (E1).

13. Embout d'extrémité (1) selon les revendications 7 et 11, **caractérisé en ce que** la languette (107e) est équipée d'un téton (109b) qui s'étend selon le deuxième axe (A2) et qui est relié à la languette (107e) par l'intermédiaire de l'extrémité proximale (E1).

14. Balai d'essuyage (2) comprenant au moins un embout d'extrémité (1) selon l'une quelconque des revendications 1 à 13 et ledit support flexible (3) apte à être inséré à l'intérieur d'une bouche d'entrée de l'embout d'extrémité (1), le support flexible (3) étant pourvu d'au moins une encoche (111) équipant un rebord longitudinal (110) du support flexible (3).

15. Balai d'essuyage (2) selon la revendication 14 comprenant un embout d'extrémité selon les revendications 11 à 13, **caractérisé en ce que** l'encoche (111) est d'une troisième longueur (L3) qui est égale à la première longueur (L1) et à la première distance (D1).

## Patentansprüche

1. Endstück (1) für einen Scheibenwischer (2) einer Scheibe eines Kraftfahrzeugs, umfassend mindestens eine flexible Halterung (3) sowie ein Reibblatt (4), das dazu bestimmt ist, an die Scheibe angesetzt zu sein, wobei das Endstück (1) eine Aufnahme (5) umfasst, die in der Lage ist, einen Endbereich (6) der flexiblen Halterung (3) aufzunehmen, wobei das Endstück (1) mindestens ein Mittel zur Verriegelung (7) des Endbereichs (6) der flexiblen Halterung (3) in der Eingriffsposition innerhalb der Aufnahme (5) umfasst, wobei das Mittel zur Verriegelung (7) mindestens eine Lippe (107e) umfasst, **dadurch gekennzeichnet, dass** das Mittel zur Verriegelung (7) mindestens einen Hohlraum (107a) umfasst, der zumindest von einer ersten Seitenwand (107b), einer zweiten Seitenwand (107c) und von der Lippe (107e) begrenzt wird.

2. Endstück (1) nach Anspruch 1, **dadurch gekennzeichnet, dass** die Lippe (107e) auf der ersten Seitenwand (107b) schwenkbeweglich gelagert ist.

3. Endstück (1) nach einem der vorhergehenden Ansprüche, **dadurch gekennzeichnet, dass** der Hohlraum (107a) in einer Aufnahme eines Klebemittels (107g) angeordnet ist, das innerhalb des Hohlraums (107a) angeordnet ist, um die Lippe (107e) in der Verriegelungsposition zu fixieren.

4. Endstück (1) nach einem der vorhergehenden Ansprüche, **dadurch gekennzeichnet, dass** der Hohlraum (107a) von mindestens einer Bodenwand (107d) begrenzt wird, die das Endstück (1) umfasst.

5. Endstück (1) nach einem der vorhergehenden Ansprüche, **dadurch gekennzeichnet, dass** der Hohlraum (107a) gegenüber einer Öffnung (5) offen ist, die quer durch das Endstück (1) angeordnet ist.

6. Endstück (1) nach einem der vorhergehenden Ansprüche, **dadurch gekennzeichnet, dass** sich die Lippe (107e) gemäß einer ersten Längserstreckungsachse (A1) des Endstücks (1) erstreckt.

7. Endstück (1) nach Anspruch 6, **dadurch gekennzeichnet, dass** sich die erste Seitenwand (107b) und die zweite Seitenwand (107c) gemäß einer zweiten Achse (A2) erstrecken, die orthogonal zur ersten Längserstreckungsachse (A1) des Endstücks (1) verläuft.

8. Endstück (1) nach einem der vorhergehenden Ansprüche, **dadurch gekennzeichnet, dass** die Lippe (107e) einen Anschlag (107f) zum Inkontaktbringen der Lippe (107e) gegen die zweite Seitenwand (107c) umfasst.

9. Endstück (1) nach Anspruch 8, **dadurch gekennzeichnet, dass** der Anschlag (107f) in einer Gleitrampe der Lippe (107e) gegen die zweite Seitenwand (107c) angeordnet ist.

10. Endstück (1) nach Anspruch 7 und einem der Ansprüche 8 und 9, **dadurch gekennzeichnet, dass** sich der Anschlag (107f) gemäß der zweiten Achse (A2) erstreckt.

11. Endstück (1) nach einem der Ansprüche 6 bis 10, **dadurch gekennzeichnet, dass** der Hohlraum (107a) eine erste Länge (L1) aufweist, die gemäß der ersten Achse (A1) zwischen der ersten Seitenwand (107b) und der zweiten Seitenwand (107c) gemessen wird, die gleich einem ersten Abstand (D1) ist, der gemäß der ersten Achse (A1) zwischen einem proximalen Ende (E1) und einem distalen Ende (E2), die die Lippe (107e) umfasst, gemessen wird.

12. Endstück (1) nach den Ansprüchen 6 und 11, **dadurch gekennzeichnet, dass** die Lippe (107e) um einen Finger (109a) verlängert ist, der sich gemäß der ersten Achse (A1) erstreckt und der mittels des proximalen Endes (E1) mit der Lippe (107e) verbunden ist.

13. Endstück (1) nach den Ansprüchen 7 und 11, **dadurch gekennzeichnet, dass** die Lippe (107e) mit einem Nippel (109b) ausgestattet ist, der sich gemäß der zweiten Achse (A2) erstreckt und der mittels des proximalen Endes (E1) mit der Lippe (107e) verbunden ist.

14. Scheibenwischer (2), umfassend mindestens ein Endstück (1) nach einem der Ansprüche 1 bis 13 und die flexible Halterung (3), die in der Lage ist, in eine Eingangsöffnung des Endstücks (1) eingeführt zu werden, wobei die flexible Halterung (3) mit mindestens einer Rille (111) versehen ist, die in einen längs verlaufenden Rand (110) der flexiblen Halterung (3) eingebracht ist.

15. Scheibenwischer (2) nach Anspruch 14, umfassend ein Endstück nach den Ansprüchen 11 bis 13, **dadurch gekennzeichnet, dass** die Rille (111) eine dritte Länge (L3) aufweist, die gleich der ersten Länge (L1) und dem ersten Abstand (D1) ist.

## Claims

1. End-piece (1) for a motor vehicle glass wiper (2) including at least one flexible support (3) and a wiper blade (4) intended to be pressed against the glass, the end-piece (1) including a housing (5) adapted to receive an end portion (6) of the flexible support (3), the end-piece (1) including means (7) for locking the end portion (6) of the flexible support (3) in an engaged position inside the housing (5), the locking means (7) including at least one tongue (107e), **characterized in that** the locking means (7) include at least one cavity (107a) that is delimited by at least a first lateral wall (107b), a second lateral wall (107c) and the tongue (107e).

2. End-piece (1) according to Claim 1, **characterized in that** the tongue (107e) is pivotally mounted on the first lateral wall (107b).

3. End-piece (1) according to either one of the preceding claims, **characterized in that** the cavity (107a) is in a receptacle for gluing means (107g) placed inside the cavity (107a) to immobilize the tongue (107e) in the locking position.

4. End-piece (1) according to any one of the preceding claims, **characterized in that** the cavity (107a) is delimited by at least one end wall (107d) of the end-piece (1).

5. End-piece (1) according to any one of the preceding claims, **characterized in that** the cavity (107a) is open in line with an opening (5) through the end-piece (1).

6. End-piece (1) according to any one of the preceding claims, **characterized in that** the tongue (107e) extends along a first axis (A1) along which the end-piece (1).

7. End-piece (1) according to Claim 6, **characterized in that** the first lateral wall (107b) and the second lateral wall (107c) extend along a second axis (A2) that is orthogonal to the first axis (A1) along which the end-piece (1) extends longitudinally.

8. End-piece (1) according to any one of the preceding claims, **characterized in that** the tongue (107e) includes an abutment (107f) whereby the tongue (107e) is placed in contact against the second lateral wall (107c).

9. End-piece (1) according to Claim 8, **characterized in that** the abutment (107f) is a ramp on which the tongue (107e) slides against the second lateral wall (107c).

10. End-piece (1) according to Claim 7 and either one of Claims 8 and 9, **characterized in that** the abutment (107f) extends along the second axis (A2).

11. End-piece (1) according to any one of Claims 6 to 10, **characterized in that** the cavity (107a) has a first length (L1) measured along the first axis (A1) between the first lateral wall (107b) and the second lateral wall (107c) that is equal to a first distance (D1) measured along the first axis (A1) between a proximal end (E1) and a distal end (E2) of the tongue (107e).

12. End-piece (1) according to Claims 6 and 11, **characterized in that** the tongue (107e) is extended by a finger (109a) that extends along the first axis (A1) and is connected to the tongue (107e) via the proximal end (E1).

13. End-piece (1) according to Claims 7 and 11, **characterized in that** the tongue (107e) is equipped with a nipple (109b) that extends along the second axis (A2) and is connected to the tongue (107e) via the proximal end (E1).

14. Wiper (2) including at least one end-piece (1) according to any one of Claims 1 to 13 and said flexible support (3) adapted to be inserted into an entry mouth of the end-piece (1), the flexible support (3) including at least one notch (111) in a longitudinal edge (110) of the flexible support (3).

15. Wiper (2) according to Claim 14 including an end-piece according to Claims 11 to 13, **characterized in that** the notch (111) has a third length (L3) that is equal to the first length (L1) and to the first distance (D1).
